# EUROPÄISCHE PATENTSCHRIFT

(11) **EP 3 283 985 B1**
(45) Veröffentlichungstag und Bekanntmachung des Hinweises auf die Patenterteilung: **11.06.2025**
(21) Anmeldenummer: 16721089.7
(22) Anmeldetag: 15.04.2016
(51) Int. Cl.: B22F 10/28, B22F 10/31, B22F 10/85, B29C 64/153, B29C 64/165, B33Y 30/00, B33Y 50/02

(54) **VERFAHREN UND STEUERBEFEHLS-GENERIERUNGSEINHEIT ZUR AUTOMATISCHEN GENERIERUNG VON STEUERBEFEHLEN EINER GENERATIVEN SCHICHTBAUVORRICHTUNG**
METHOD AND CONTROL COMMAND GENERATION UNIT FOR AUTOMATIC GENERATION OF CONTROL COMMANDS FOR A 3D PRINTER
PROCÉDÉ ET UNITÉ DE CONTRÔLE POUR LA GÉNÉRATION AUTOMATIQUE DE CONTROLE DES COMMANDES POUR UNE IMPRIMANTE 3D

(30) Priorität: 17.04.2015 DE 102015004924
(43) Veröffentlichungstag der Anmeldung: 21.02.2018
(73) Patentinhaber: EOS GmbH Electro Optical Systems, 82152 Krailling (DE)
(72) Erfinder: HÜMMELER, Ludger, 82131 Gauting (DE); SEMMLER, Manfred, 87700 Memmingen (DE); MAYER, Siegfried, Kolbermoor 83059 (DE); FROHNMAIER, Markus, 94491 Hengersberg (DE)
(74) Vertreter: Prüfer & Partner mbB Patentanwälte · Rechtsanwälte
(86) Internationale Anmeldenummer: PCT/EP2016/058439
(87) Internationale Veröffentlichungsnummer: WO 2016/166337

(56) Entgegenhaltungen:
- WO-A1-2011/100978
- WO-A2-2012/021816
- US-B1- 6 280 785
- ONUH S O ET AL: "Rapid prototyping technology: applications and benefits for rapid product development", JOURNAL OF INTELLIGENT MANUFACTURING, KLUWER ACADEMIC PUBLISHERS, BO, vol. 10, no. 3-4, 1 September 1999 (1999-09-01), pages 301 - 311, XP002570341, ISSN: 1572-8145, DOI: 10.1023/A:1008956126775
- MINGAREEV ILYA ET AL: "Post-processing of 3D-printed parts using femtosecond and picosecond laser radiation", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 8970, 6 March 2014 (2014-03-06), pages 89700R-1 - 89700R-7, XP060034501, ISBN: 978-1-62841-730-2, DOI: 10.1117/12.2040049

## Beschreibung

Die Erfindung betrifft ein Verfahren und eine Vorrichtung zur Bereitstellung von Steuerbefehlen zur Herstellung einer Anzahl von dreidimensionalen Objekten mittels einer generativen Schichtbauvorrichtung. Weiterhin betrifft die Erfindung ein Verfahren und eine Vorrichtung zur Herstellung der Anzahl von dreidimensionalen Objekten unter Verwendung der bereitgestellten Steuerbefehle.

Generative Schichtbauverfahren, wie beispielsweise das Lasersintern oder -schmelzen oder die Stereolithographie sind dadurch gekennzeichnet, dass herzustellende Objekte Schicht für Schicht aus einem pulverförmigen oder flüssigen Aufbaumaterial hergestellt werden, indem in jeder Schicht die Querschnitte der Objekte in dieser Schicht durch Verfestigung des Aufbaumaterials erzeugt werden. Für die Herstellung ist das Vorhandensein einer computerbasierten dreidimensionalen Repräsentation der Objekte vonnöten, die beispielsweise mittels eines CAD-Entwurfsprogramms erstellt werden kann.

Der Bauvorgang findet in der Regel in einer innerhalb der generativen Schichtbauvorrichtung vorhandenen Baukammer statt, aus der die Objekte nach Abschluss des Herstellungsvorgangs entnommen werden. Für eine effiziente Ausnutzung der Baukammer ist eine möglichst kompakte Anordnung der herzustellenden Objekte in der Baukammer wünschenswert. Dabei sollten bevorzugt zusammengehörige Objekte benachbart zueinander in der Baukammer angeordnet sein. Damit die Anordnung nicht aufwändig durch eine Person vorgenommen werden muss, schlägt WO 2011/100978 Al ein automatisiertes Anordnungsverfahren vor.

Bei der Herstellung der Objekte wird zunächst eine maßstabsgetreue Herstellung entsprechend der computerbasierten dreidimensionalen Repräsentation der Objekte angestrebt. Allerdings kann es bedingt durch den Bauvorgang zu Größenabweichungen kommen. Zum einen kann es infolge von Verschmelzungen des ein Objekt umgebenden Aufbaumaterials mit dem Objekt zu einer Vergrößerung von Dimensionen des Objekts kommen, zum anderen können Temperaturschwankungen während des Herstellungsvorgangs zu einem Verzug führen und es kann infolge des Verfestigungsvorgangs zu einem Schwund kommen. Solche Größenabweichungen könnten zwar im Vorhinein durch eine Anpassung der computerbasierten dreidimensionalen Repräsentation eines Objekts berücksichtigt werden, jedoch führt dies bei einer Mehrzahl von Objekten in der Baukammer zu Problemen, da sich die relative Lage der Objekte zueinander ändert.

Es ist daher eine Aufgabe der vorliegenden Erfindung, ein Verfahren und eine Vorrichtung bereitzustellen, mittels derer Dimensionsänderungen von Objekten infolge des Bauvorgangs berücksichtigt werden können, ohne dass dadurch der Bauvorgang oder die relative Lage der Objekte zueinander stark beeinträchtigt wird.

Die Aufgabe wird gelöst durch eine Vorrichtung zur Bereitstellung von Steuerbefehlen nach Anspruch 1, ein Verfahren zur Bereitstellung von Steuerbefehlen nach Anspruch 2, ein Verfahren zur Herstellung einer Anzahl von dreidimensionalen Objekten mittels einer generativen Schichtbauvorrichtung nach Anspruch 11, eine generative Schichtbauvorrichtung nach Anspruch 13 sowie ein Computerprogramm nach Anspruch 14. Weiterbildungen der Erfindung sind in den abhängigen Ansprüchen angegeben. Ein erfindungsgemäßes Verfahren zur Bereitstellung von Steuerbefehlen zur Herstellung einer Anzahl von dreidimensionalen Objekten mittels einer generativen Schichtbauvorrichtung, wobei in der generativen Schichtbauvorrichtung die Anzahl von Objekten Schicht für Schicht auf einer Bauunterlage hergestellt wird, indem jeweils eine Schicht eines formlosen Aufbaumaterials auf die Bauunterlage oder eine bereits vorhandene Aufbaumaterialschicht aufgetragen wird

In der Regel handelt es sich bei dem computerbasierten Modell der Anzahl von mittels der generativen Schichtbauvorrichtung herzustellenden Objekten um ein mittels eines CAD-Entwurfssystems erstelltes Modell, in dem ein Nullpunkt (Koordinatenursprung) für jedes der Anzahl der Objekte definiert ist. Erfindungsgemäß wird nun beispielsweise ein gemeinsamer Nullpunkt für die Anzahl der Objekte im CAD-Koordinatensystem definiert und dieser dann einem bestimmten Ort, der in Baufeldkoordinaten auf dem Baufeld spezifiziert ist, zugewiesen. Damit kann ein Nutzer individuelle Nullpunkte (Referenzpunkte zur Positionierung) auf dem Baufeld der generativen Schichtbauvorrichtung einrichten. Dadurch wird es ermöglicht, die Geometriedaten von zu sinternden Bauteilen auf definierte Positionen genau zu platzieren und die relative Lage der Geometriedaten bezüglich des Nullpunkts im CAD-System kann übernommen werden. Erfindungsgemäß wird einer Anzahl von Objekten ein gemeinsamer Referenzort, insbesondere als gemeinsamer Koordinatenursprung, zugewiesen. Durch das Schaffen solch eines gemeinsamen Bezugspunkts für die geometrische Beschreibung der Anzahl von Objekten wird eine Beziehung zwischen den einzelnen Objekten hergestellt, welche es möglich macht, Abänderungen an den geometrischen Beschreibungen der einzelnen Objekte aufeinander abzustimmen.

Bevorzugte Weiterbildungen und Ausführungsbeispiele der Erfindung finden sich im Folgenden bzw. in den Unteransprüchen zum erfindungsgemäßen Verfahren. Jedes Merkmal, das im Folgenden im Zusammenhang mit einer Anspruchskategorie (Verfahren, Steuerbefehl-Generierungseinheit, Vorrichtung und Computerprogramm) erwähnt ist, kann genauso im Rahmen der Erfindung auch für jede andere Anspruchskategorie Anwendung finden.

Bevorzugt handelt es sich bei dem gemeinsamen Referenzort um einen Ort auf der Bauunterlage oder einen Ort mit fest vorgegebener Position relativ zur Bauunterlage. Bei der Bauunterlage handelt es sich um einen in einer generativen Schichtbauvorrichtung, in der Regel in einer Baukammer, angeordneten und senkrecht zu den Schichten verfahrbaren Träger oder eine auf diesem angeordnete Platte bzw. Bauplattform. Insbesondere kann es sich bei dem Ort mit fest vorgegebener Position relativ zur Bauunterlage um einen Ort in dem Baufeld der generativen Schichtbauvorrichtung handeln, also einen Ort in jener horizontalen Ebene durch die Baukammer, in der die Verfestigung des Aufbaumaterials stattfindet. Der Referenzort dient damit also auch der ortsgenauen Zuweisung der Anzahl der Objekte zu einem "Bauort" im Baufeld.

Die Anordnung erfolgt bevorzugt auf Basis eines Koordinatensystems, das eine Geometrie des Baufelds repräsentiert, wobei der Referenzort einem definierten Ort in dem Koordinatensystem zugewiesen wird. Das Koordinatensystem kann beispielsweise als gleichmäßiges Raster ausgebildet sein.

Bevorzugt wird in dem erfindungsgemäßen Verfahren bei dem Schritt des Abänderns des computerbasierten Modells zusätzlich das computerbasierte Modell durch eine Drehung und/oder zentrische Streckung bezogen auf einen gemeinsamen Transformationsreferenzpunkt für die Anzahl der Objekte, in ein abgeändertes computerbasiertes Modell überführt.

Mittels der Streckung des computerbasierten Modells zum Erhalt eines abgeänderten computerbasierten Modells kann durch den Bauvorgang verursachten Dimensionsänderungen von Objekten begegnet werden. Allgemein sind nicht nur Drehungen und Streckungen, sondern zentrische affine Transformationen mit einem Fixpunkt, bevorzugt um Ähnlichkeitstransformationen, die Verhältnisse von Strecken zueinander und Winkelgrößen unverändert lassen, möglich, solange es sich nicht um identische Transformationen ohne Abänderung, also Abbildungen des computerbasierten Modells auf sich selbst, handelt. Hierzu ist noch zu bemerken, dass eine Skalierung (also zentrische Streckung) von dreidimensionalen Objekten vor ihrer Herstellung oftmals aus Gründen des Ausgleichs des im jeweiligen Schichtbauverfahren zu erwartenden Schwunds angewandt wird. Schwund und Skalierung sind somit Faktoren der Abmessungen des dreidimensionalen Objekts, die sich gegenseitig möglichst genau im Wesentlichen aufheben, d.h. die zentrische Streckung kompensiert bereits im Vorhinein den zu erwartenden Schwund. Durch die Wahl eines gemeinsamen Transformationsreferenzpunkt für die Anzahl der Objekte wird die Möglichkeit geschaffen, alle Objekte innerhalb der Anzahl von Objekten um einen gemeinsamen Referenzpunkt zu schwinden und zu drehen. Damit wird eine gemeinsame Schwundberechnung sowie eine gleiche Translation, Rotation und ein gleicher Schwund für die gesamte Anzahl von Objekten erreicht.

Bevorzugt kann das Verfahren auf Fälle angewendet werden, in denen auf der Bauunterlage ein halbfertiges Teil angeordnet ist, das durch die Herstellung der Anzahl von Objekten auf diesem halbfertigen Teil vervollständigt wird. Der Drehung und/oder zentrischen Streckung wird dann ein gemeinsamer Transformationsreferenzpunkt für die Anzahl der Objekte und das halbfertige Teil zugrunde gelegt. Durch die Wahl eines gemeinsamen Transformationsreferenzpunktes wird eine aus der Transformation (Drehung oder zentrische Streckung) resultierende Verschiebung der Objekte gegenüber dem halbfertigen Teil vermieden. Es sei noch betont, dass es natürlich auch möglich ist, für unterschiedliche Transformationen unterschiedliche Transformationsreferenzpunkte zu wählen.

Bevorzugt handelt es sich bei dem Transformationsreferenzpunkt um einen geometrischen Mittelpunkt in dem computerbasierten Modell, insbesondere einen Symmetriepunkt oder einen Schwerpunkt. Durch die Verwendung eines geometrischen Mittelpunkts ist es möglich, bei einer Transformation, z.B. bei einer zentrischen Streckung, Verzerrungen in der geometrischen Beschreibung der Anzahl von Objekten zu minimieren.

Insbesondere kann es sich bei dem geometrischen Mittelpunkt um einen anhand von einem oder mehreren die Objekte umgebenden Hüllkörpern, insbesondere minimal umgebenden Quadern, definierten Mittelpunkt handelt. Der Hüllkörper (engl. bounding box) kann dabei auch ein dreidimensionales Gebilde sein, welches so konstruiert ist, dass eine einen Objektquerschnitt in einer ausgewählten Schicht umgebende zweidimensionale Figur, z.B. ein den Querschnitt minimal umgebendes Rechteck in der Richtung senkrecht zu dem Querschnitt verlängert wird. Der geometrische Mittelpunkt kann insbesondere das Zentrum einer Boundingbox sein.

Bevorzugt handelt es sich bei dem Transformationsreferenzpunkt um einen Symmetriepunkt oder Schwerpunkt eines der Anzahl von Objekten oder einen geometrischen Mittelpunkt von dessen Hüllkörper. Damit wird gleichzeitig eines der Objekte als Masterteil ausgewählt, relativ zu welchem eine Transformation des computerbasierten Modells der übrigen Objekte stattfindet, das also als eine Art Ausgangsobjekt für die Skalierung bzw. Orientierung definiert und verwendet wird.

Bevorzugt wird der Transformationsreferenzpunkt so gewählt, dass er mit dem gemeinsamen Referenzort zusammenfällt. Wenn sowohl eine Skalierung als auch eine (Um-)Orientierung der Anzahl von Objekten vorgenommen werden soll, so kann es sehr von Vorteil sein, wenn für die Skalierung ein erster Transformationsreferenzpunkt und für die Orientierung ein zweiter, vom ersten Transformationsreferenzpunkt unterschiedlicher Transformationsreferenzpunkt zugrunde gelegt wird. Dabei wird weiter bevorzugt zuerst die Orientierung auf Basis des zweiten Transformationsreferenzpunkts und dann die Skalierung vorgenommen. Wählt man allerdings den gemeinsamen Referenzort als Transformationsreferenzpunkt, so vereinfacht sich dadurch die Durchführung einer Transformation, ohne dass dadurch der Bauvorgang oder die relative Größenbeziehung der Objekte zueinander stark beeinträchtigt werden, erheblich.

Bei einer Abwandlung des erfindungsgemäßen Verfahrens wird zusätzlich abgeprüft, ob es in dem abgeänderten computerbasierten Modell Überschneidungen von Objekten oder Überschneidungen von deren Hüllkörpern gibt. Falls dies der Fall ist, werden in dem Modell die betreffenden Objekte solange verschoben, bis keine Überschneidung mehr vorliegt. Selbst bei Durchführung einer Skalierung mit einem gemeinsamen Transformationsreferenzpunkt für die Anzahl von Objekten können die Dimensionsänderungen an den Objekten dazu führen, dass diese im abgeänderten computerbasierten Modell kollidieren (sich überschneiden). Bei einer Überlappung eines Objekts mit anderen Objekten und/oder mit einem vorgegebenen Messpunkt im Baufeld und/oder mit einer Begrenzung des Baufelds kann auch eine Warnmeldung initiiert werden und/oder eine automatische Umordnung von Objekten im Baufeld durchgeführt werden. Alternativ oder ergänzend kann die Warnmeldung an einen Benutzer ausgegeben werden, der dann selbsttätig, bevorzugt jedoch wieder algorithmusunterstützt, eine solche Umordnung durchführt.

Bevorzugt kann die Erfindung im Zusammenhang mit generativen Schichtbauvorrichtungen eingesetzt werden, in denen eine Bauunterlage verwendet wird, die geeignet ist, nach Abschluss des Herstellungsvorgangs mitsamt der hergestellten Anzahl der Objekte der generativen Schichtbauvorrichtung entnommen zu werden und in eine Weiterverarbeitungsvorrichtung für eine weitere Bearbeitung mindestens eines, bevorzugt aller, der hergestellten Anzahl der Objekte eingesetzt zu werden. Auch in der Weiterverarbeitungsvorrichtung kann dabei die Bauunterlage, z.B. eine Plattform, als Bearbeitungsunterlage zur Abstützung der weiterzubearbeitenden Objekte während der weiteren Bearbeitung dienen. In solch einem Fall wird der Weiterverarbeitungsvorrichtung bevorzugt der Referenzort und/oder das abgeänderte Modell der weiterzubearbeitenden Objekte, in welchem für die geometrische Beschreibung der weiterzubearbeitenden Objekte ein Ort als gemeinsamer Referenzort, insbesondere als gemeinsamer Koordinatenursprung, festgelegt ist, übermittelt. Solch eine nachgeschaltete weitere Bearbeitung wäre beispielsweise ein Fräsen, eine Funkenerosion, ein Schleifen, ein Polieren uvm., das nach Abschluss des generativen Schichtbauverfahrens nachträglich durchgeführt wird. Da für die weitere Bearbeitung der gleiche Referenzort zu Grunde gelegt wird, entfällt eine Kalibrierung der Weiterverarbeitungsvorrichtung, insbesondere wenn der Referenzort eine fest vorgegebene Position relativ zur Bauunterlage aufweist. Wenn beispielsweise der im CAD-Koordinatensystem definierte Koordinatenursprung für die geometrische Beschreibung der Anzahl der Objekte einem Referenzort auf der Bauunterlage zugewiesen wird, dann kann eine beispielsweise für die Weiterbearbeitung von Objekten verwendete Fräsmaschine, in welcher die Bauunterlage samt Objekten eingesetzt wird, ohne aufwändigen Justiervorgang weiterhin auf dieselbe geometrische Beschreibung der Objekte Bezug nehmen wie die generative Schichtbauvorrichtung. Damit kann die weitere Bearbeitung deutlich einfacher, schneller und vor allem akkurater durchgeführt werden.

Wenn die Erfindung im Zusammenhang mit generativen Schichtbauvorgängen eingesetzt wird, in denen als Bauunterlage ein halbfertiges Teil verwendet wird, das durch die Herstellung der Anzahl von Objekten auf diesem halbfertigen Teil vervollständigt wird, dann kann in diesem Fall bevorzugt als Referenzort der gleiche Ort gewählt werden, der in einem vorangegangenen Herstellungsvorgang für das halbfertige Teil als Referenzort gewählt wurde. Wenn solch ein Referenzort aus einem vorgeschalteten Herstellungsvorgang übernommen wird, dann ist dies sehr vorteilhaft, weil dann bei beiden Herstellungsvorgängen (vorgeschaltetes Verfahren und generatives Schichtbauverfahren) dieselben Ortsinformationen (Referenzorte) im Sinne eines gemeinsamen Koordinaten- bzw. Orientierungssystems verwendet werden können. Somit gestaltet sich eine Kalibrierung der generativen Schichtbauvorrichtung, so eine solche überhaupt notwendig ist, als sehr einfach und der generative Schichtbauvorgang kann einfacher, schneller und vor allem akkurater durchgeführt werden.

Besonders bevorzugt läuft das erfindungsgemäße Verfahren vollautomatisch, das heißt ohne eine notwendige Eingabe eines Nutzers, ab. Dies führt zu einer Beschleunigung und Vereinfachung des generativen Schichtbauvorgangs.

Bei der Modelldaten-Zugriffseinheit kann es sich um eine Eingangsschnittstelle handeln, welche Daten von einem mobilen Datenträger einlesen kann oder Daten über ein Netzwerk entgegennimmt oder aber Daten direkt aus einer Datenbank ausliest. Da die Vorrichtung zur Bereitstellung von Steuerbefehlen insbesondere nicht nur als separate Einheit implementiert werden kann, sondern auch Bestandteil eines umfassenderen EDV-Systems (z.B. eines CAD-Entwurfssystems oder eines Objekteigenschaftssimulationssystems) oder einer generativen Schichtbauvorrichtung sein kann, kann es sich bei der Modelldaten-Zugriffseinheit auch lediglich um eine Softwareschnittstelle handeln, die mit den anderen Systemkomponenten kommuniziert. Das Netzwerk kann ein LAN sein oder aber auch das Internet, wodurch die Daten auch zu einer von der Vorrichtung zur Bereitstellung von Steuerbefehlen räumlich entfernten Schichtbauvorrichtung übermittelt werden können. Insbesondere wenn die Vorrichtung zur Bereitstellung von Steuerbefehlen in eine generative Schichtbauvorrichtung integriert ist, ist auch eine Datenübertragung über ein Bussystem oder einen gemeinsamen Speicher möglich. Bei einer bevorzugten Ausführung der erfindungsgemäßen Vorrichtung zur Bereitstellung von Steuerbefehlen ist die Modellabänderungseinheit (102) so ausgelegt, dass sie zusätzlich das computerbasierte Modell durch eine Drehung und/oder zentrische Streckung bezogen auf einen gemeinsamen Transformationsreferenzpunkt für die Anzahl der Objekte in ein abgeändertes computerbasiertes Modell überführt.
- Fig. 1: zeigt eine schematische Darstellung einer generativen Schichtbauvorrichtung am Beispiel einer Lasersintervorrichtung.
- Fig. 2: zeigt eine schematische Draufsicht auf einen Teil eines Baufelds einer generativen Schichtbauvorrichtung zur Erläuterung eines ersten Ausführungsbeispiels des erfindungsgemäßen Verfahrens.
- Fig. 3: zeigt den Aufbau eines Ausführungsbeispiels einer erfindungsgemäßen Vorrichtung zur Bereitstellung von Steuerbefehlen.
- Fig. 4: zeigt eine schematische perspektivische Ansicht eines Modells eines herzustellenden dreidimensionalen Objekts auf einer Unterlage für die Herstellung gemäß einem zweiten Ausführungsbeispiel des erfindungsgemäßen Verfahrens,
- Fig. 5: eine Draufsicht auf das Modell von Fig. 4.

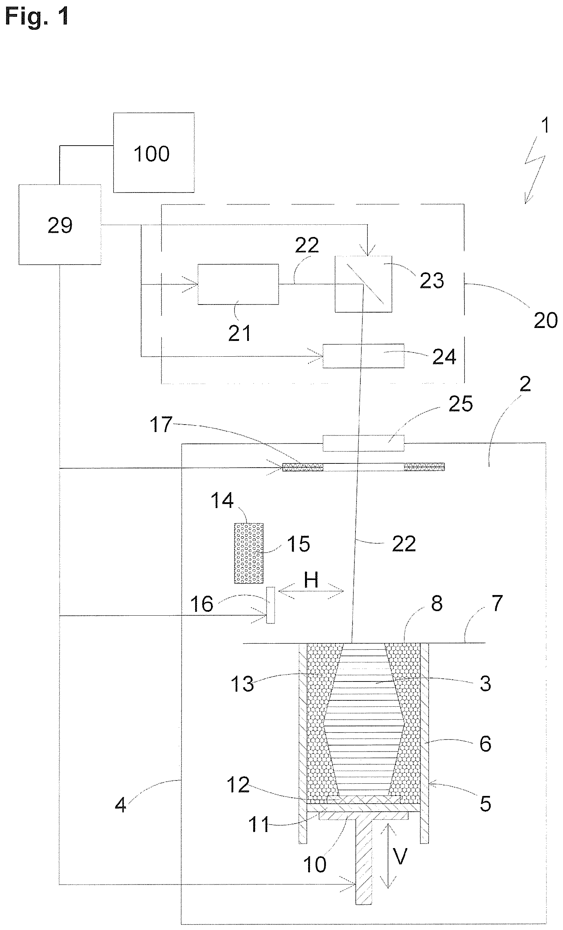

Im Zusammenhang mit der Beschreibung der Erfindung ist zu bemerken, dass der Begriff des Nullpunkts synonym für den hier sonst durchgängig verwendeten Begriff des Referenzorts im Sinne eines im Wesentlichen punktförmigen Referenzorts zu verstehen ist. Der Begriff "Bauteil" oder "Teil" steht jeweils für ein herzustellendes dreidimensionales Objekt. Weiter wird manchmal auch an Stelle des Begriffs "Anzahl" synonym der Begriff "Gruppe" verwendet. Für eine Beschreibung des erfindungsgemäßen Verfahrens soll zunächst nachfolgend am Beispiel einer Lasersinter- oder schmelzvorrichtung eine erfindungsgemäße generative Schichtbauvorrichtung unter Bezugnahme auf Fig. 1 beschrieben werden.

Zum Aufbauen eines Objekts 3 enthält die Lasersinter- oder Laserschmelzvorrichtung 1 eine Prozesskammer oder Baukammer 2 mit einer Kammerwandung 4.

In der Prozesskammer 2 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 3 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 3 aufgebaut wird. Das Objekt 3 kann aber auch auf der Grundplatte 11 selber aufgebaut werden, die dann als Bauunterlage dient. In Fig. 1 ist das in dem Behälter 5 auf der Bauplattform 12 zu bildende Objekt 3 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Optional ist in der Prozesskammer 2 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 2 in der Kammerwandung 4 angebracht ist, auf die Arbeitsebene 7 fokussiert wird.

Weiter enthält die Lasersintervorrichtung 1 eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der Vorrichtung angebracht sein. Die Steuereinrichtung kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinrichtung geladen werden kann.

Die Steuereinrichtung 29 wird über einen Steuerbefehlssatz angesteuert, der u.a. Daten enthält, die die Struktur der herzustellenden Anzahl von Objekten beinhalten, insbesondere ein dreidimensionales CAD-Schichtenmodell der Objekte mit Informationen über den jeweiligen Querschnitt eines Objekts in jeder zu verfestigenden Schicht des Aufbaumaterials, und Daten, die die genauen Parameter beim Verfestigen des Aufbaumaterials festlegen. Insbesondere enthalten die Daten genaue Informationen über jede zu verfestigende Schicht bei der Herstellung der Anzahl von Objekten.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 zum Verfestigen der jeweiligen Schicht an den dem jeweiligen Objekt entsprechenden Stellen mittels des Laserstrahls 22 in dem Baufeld 8 angesteuert.

Als pulverförmiges Aufbaumaterial können alle für das Lasersinter- oder schmelzverfahren geeigneten Pulver bzw. Pulvermischungen verwendet werden. Solche Pulver umfassen z. B. Kunststoffpulver wie Polyamid oder Polystyrol, PAEK (Polyaryl Ether Ketone), Elastomere, wie PEBA (Polyether Block Amide), kunststoffbeschichteten Sand, Keramikpulver oder Metallpulver, wie z.B. Edelstahlpulver oder andere, an den jeweiligen Zweck angepasste Metallpulver, insbesondere Legierungen.

Die erfindungsgemäße generative Schichtbauvorrichtung enthält zusätzlich noch eine Vorrichtung zur Bereitstellung von Steuerbefehlen 100, die weiter unten beschrieben wird. Diese Vorrichtung zur Bereitstellung von Steuerbefehlen 100 liefert an die Steuereinrichtung 29 Steuerbefehle, welche von der Steuereinrichtung 29 bei der Durchführung des Herstellungsvorgangs eines Objekts zugrunde gelegt werden.

Neben dem Lasersintern zählen zu den von der Erfindung abgedeckten generativen Schichtbauverfahren auch noch das Laserschmelzverfahren, Maskenverfahren, bei denen zum selektiven Verfestigen einer Materialschicht Masken verwendet werden, 3D-Druckverfahren, Stereolithografieverfahren, etc. Die oben beispielhaft beschriebene generative Schichtbauvorrichtung hat naturgemäß einen anderen, aus dem Stand der Technik bekannten Aufbau, falls es sich bei dem Verfahren nicht um ein Lasersinter- oder Schmelzverfahren handelt. Ebenso umfasst eine erfindungsgemäße generative Schichtbauvorrichtung für ein Lasersinter- oder - schmelzverfahren auch apparative Abwandlungen gegenüber dem oben beschriebenen Beispiel, sofern eine weiter unten beschriebene Vorrichtung zur Bereitstellung von Steuerbefehlen 100, welche auch Bestandteil der Steuereinrichtung 29 sein kann, vorhanden ist. Die Erfindung umfasst neben mindestens einem Aufbaumittel zur generativen schichtbasierten Herstellung von dreidimensionalen Objekten eine erfindungsgemäße Steuerbefehl-Generierungseinheit oder eine Datenverbindung zu einer solchen Steuerbefehl-Generierungseinheit. Als Aufbaumittel werden all jene insbesondere mechanischen und/oder optischen Vorrichtungen bezeichnet, die bei einem Schichtbauverfahren wie z.B. dem selektiven Lasersintern oder ähnlichen hinlänglich bekannten Schichtbauverfahren Verwendung finden, zum Beispiel Beschichter für Aufbaumaterialien, Laser oder andere Strahlungs- bzw. Teilchenquellen zur zielgerichteten Richtung von Energie auf bestimmte Punkte des Aufbaumaterials, optische Elemente uvm. Als beispielhafte Referenz für eine Vorrichtung zur Durchführung eines generativen Schichtbauverfahrens zur Herstellung einer Anzahl von dreidimensionalen Objekten und für darin enthaltene Aufbaumittel kann die in der DE 195 14 740 C1 beschriebene Vorrichtung mit allen ihren dinglichen Komponenten gelten. Die Offenbarung dieser Schrift wird hiermit als Teil der Offenbarung der vorliegenden Anmeldung verstanden.

Bei einem generativen Fertigungsverfahren, bei dem Objekte schichtweise aus einem Baumaterial hergestellt werden, liegt zunächst ein computergestütztes Modell (CAD-Modell) des herzustellenden Objekts vor. Ein Steuerbefehlssatz für die Steuereinrichtung 29 liefert der Steuereinrichtung 29 unter Bezugnahme auf das computergestützte Modell (CAD-Modell) des herzustellenden Objekts für jeden Punkt in einer selektiv zu verfestigenden Schicht spezifische Informationen, wie die Verfestigung vonstatten gehen soll. Im Falle eines Lasersinter- oder schmelzverfahrens beinhaltet dies beispielsweise Informationen über die Laserintensität, den Laserstrahldurchmesser, die Reihenfolge, mit der die einzelnen Punkte der Schicht verfestigt werden, einen etwaigen Versatz des Laserstrahls an der Kontur eines zu verfestigenden Bereichs einer Schicht (beam offset), etc.

### Erstes Ausführungsbeispiel

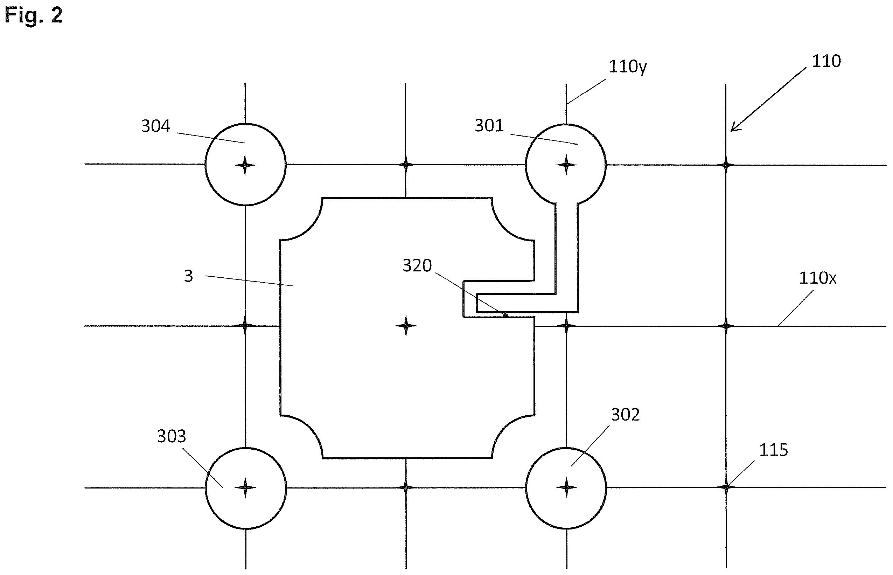

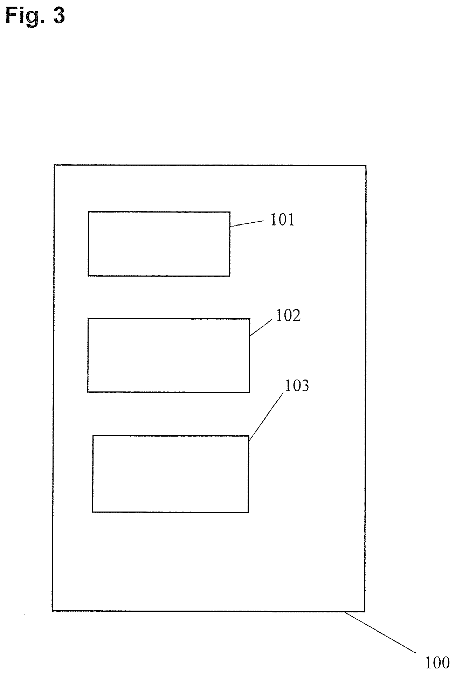

Ein erstes Ausführungsbeispiel der Erfindung wird nachfolgend unter Bezugnahme auf Fig. 2 und 3 beschrieben. Fig. 2 zeigt eine Draufsicht auf ein Teil eines Baufelds einer generativen Schichtbauvorrichtung während der generativen Herstellung einer Anzahl von (in diesem Beispiel 5) Objekten 3, 301, 302, 303 und 304.

Zur Herstellung der Objekte wird eine Steuereinrichtung 29 der generativen Schichtbauvorrichtung über einen Steuerbefehlssatz angesteuert, der u.a. ein dreidimensionales CAD-Schichtenmodell der Objekte mit Informationen über den jeweiligen Querschnitt eines Objekts in jeder zu verfestigenden Schicht des Aufbaumaterials und Daten, die die genauen Parameter beim Verfestigen des Aufbaumaterials festlegen, enthält. Ein solcher Steuerbefehlssatz wird auf der Grundlage eines computerbasierten Modells der Anzahl von Objekten gewonnen, das beispielsweise mittels einer CAD-Software erstellt wurde. Für die Gewinnung des Steuerbefehlssatzes werden dabei Steuerbefehle von einer Vorrichtung zur Bereitstellung von Steuerbefehlen 100 bereitgestellt, die in Fig. 3 schematisch dargestellt ist. Bei solch einer Vorrichtung zur Bereitstellung von Steuerbefehlen 100 kann es sich um einen entsprechend programmierten Rechner handeln oder aber die Vorrichtung kann mittels Software realisiert sein, die z.B. auf dem CAD-Entwurfsrechner für die Anzahl von Objekten oder der Steuereinrichtung 29 läuft.

Die Vorrichtung zur Bereitstellung von Steuerbefehlen 100 weist eine Modelldaten-Zugriffseinheit 101 auf, mittels derer auf das computerbasierte Modell der Anzahl an Objekten 3, 301, 302, 303 und 304 zugegriffen wird. Bei der Modelldaten-Zugriffseinheit handelt es sich z.B. um eine Software- oder Hardware-Schnittstelle, mittels derer ein Zugriff auf die im Speicher eines CAD-Entwurfsrechners abgelegten Modelldaten (gegebenenfalls über ein Netzwerk) möglich ist. Ebensogut kann es sich bei der Modelldaten-Zugriffseinheit 101 um ein Lesegerät handeln, dass die auf einem mobilen Datenträger gespeicherten Modelldaten liest.

Die Modelldaten-Zugriffseinheit 101 führt die Modelldaten der Modellabänderungseinheit 102 zu, welche bei der Abänderung der Modelldaten wie folgt vorgeht:
Zunächst werden die Modelldaten der gesamten Anzahl von Objekten 3, 301, 302, 303 und 304 mit einem gemeinsamen Referenzort auf dem Baufeld verknüpft. Damit ist eine geometrische Beschreibung der Modelldaten der Objekte im Baufeld-Koordinatensystem gegeben. Insbesondere bei Verwendung einer Rasteranordnung der Objekte auf dem Baufeld, wie sie in Fig. 2 gezeigt ist, ist der Übergang zu Baufeldkoordinaten von Vorteil, da dann in dem abgeänderten Computermodell die Objekte mit dem vorgegeben Rasterabstand zueinander fest definierten Positionen auf dem Baufeld zugewiesen sind. Im Beispiel ist dabei das Vorgehen wie folgt:
In den Baufeldkoordinaten wird ein Raster 110 bestehend aus (in Fig. 2) horizontalen Linien 110x und vertikalen Linien 110y erzeugt. Jedem Schnittpunkt einer horizontalen Linie 110x mit einer vertikalen Linie 110y wird ein Rasterpunkt 115 zugewiesen, der ein potentieller Anordnungsort für ein Objekt ist. Im Beispiel wird jedes der Objekte 3, 301, 302, 303 und 304 auf solch einem Rasterpunkt 115 im Baufeld angeordnet (z.B. indem der gesamten Anzahl an Objekten jener Rasterpunkt als gemeinsamer Referenzpunkt zugeordnet wird, an dem das Objekt 3 angeordnet wird, und die Abstände der Objekte zueinander im Baufeldkoordinatensystem so festgelegt werden, dass jedes der Objekte 301, 302, 303 und 304 auf einem Rasterpunkt zu liegen kommt). Mit "Anordnen auf einem Rasterpunkt" ist dabei gemeint, dass der Nullpunkt des CAD-Modells eines Bauteils in Bauteilkoordinaten den Baufeldkoordinaten eines Rasterpunktes 115 zugewiesen wird.

Es sei bemerkt, dass natürlich auch auf ein Anordnungsrasterverzichtet werden kann oder eine andere Geometrie des Rasters (nicht notwendigerweise ein Rechteckraster) gewählt werden kann, solange nur der Anzahl von Objekten ein gemeinsamer Referenzort zugewiesen wird.

Wenn als Bauunterlage eine Plattform verwendet wird, die auch in anderen Bearbeitungsvorrichtungen als der generativen Schichtbauvorrichtung verwendet werden kann, so zeigt sich der besondere Vorteil der Verwendung von Baufeldkoordinaten: Wenn für eine spielfreie Anordnung der Plattform in den jeweiligen Vorrichtungen gesorgt wird (z.B. mittels eines handelsüblich erhältlichen Spannsystems), dann müssen in den einzelnen Vorrichtungen (beispielsweise einer Fräsvorrichtung, in der die hergestellten Objekte nachbehandelt werden, oder einer Vorrichtung, in der halbfertige Teile produziert werden, die dann mittels der generativen Schichtbauvorrichtung vervollständigt werden) nicht separate Justierungsvorgänge durchgeführt werden. Infolge der spielfreien Anordbarkeit der Plattform in den jeweiligen Bearbeitungsvorrichtungen gibt es eine feste Beziehung zwischen einem Vorrichtungskoordinatensystem und den Plattformkoordinaten. Es ist dann ausreichend, die Bearbeitungsvorgänge unter Bezugnahme auf die Plattformkoordinaten zu spezifizieren, ohne einen aufwändigen Justierungsvorgang durchzuführen.

Der Referenzort kann optional auf Basis eines mindestens teilautomatischen Definitionsalgorithmus festgelegt werden. Ein solcher Definitionsalgorithmus legt den Referenzort bevorzugt auf Basis einer Kriteriendatenbank fest. In der Kriteriendatenbank ist weiter bevorzugt mindestens eines der folgenden Kriterien hinterlegt:
- ein Kollisionskriterium, das bei einer Überlappung eines Objekts mit anderen Objekten und/oder mit einem vorgegebenen Messpunkt im Baufeld und/oder mit einer Begrenzung des Baufelds eine Warnmeldung initiiert, auf Basis derer bevorzugt eine automatische Umordnung von Objekten im Baufeld durchgeführt wird),
- ein bauteilspezifisches Kriterium, das bauteilspezifische Anordnungsanforderungen für eine Anordnung des Bauteils im Baufeld abfragt und die Anordnung des Bauteils entsprechend optimiert,
- ein materialspezifisches Kriterium, das spezifische Eigenschaften eines Aufbaumaterials für die Festlegung des Referenzortes berücksichtigt,
- ein Rasterkriterium, das den Referenzort automatisch an einem im Rasterkriterium hinterlegten Punkteraster festlegt.

Der Referenzort kann gemäß einem Aspekt der Erfindung auch auf Basis einer Nutzerinteraktion mindestens teilweise benutzerdefiniert festgelegt werden. Beispielsweise kann die Modellabänderungseinheit 102 optional bei einer Überlappung eines Objekts mit anderen Objekten und/oder mit einem vorgegebenen Messpunkt im Baufeld und/oder mit einer Begrenzung des Baufelds eine Warnmeldung an einen Benutzer ausgeben, der dann selbsttätig, bevorzugt jedoch wieder algorithmusunterstützt, eine Umordnung des Objekts/der Objekte durchführt. Weiterhin kann die Modellabänderungseinheit 102 optional den Referenzort automatisch einen Punkt in dem Punkteraster festlegen, der einem benutzerdefinierten Ort am nächsten liegt - dies kann als eine Art "Schnappfunktion" verstanden werden, also eine automatische Objektverschiebung anhand eines Raster hin zu von einem Benutzer vorgegebenen Punkten des Rasters. Hierzu kann z.B. eine Eingabemöglichkeit für den Nutzer geschaffen werden, z.B. eine Tabelle mit den Koordinaten der wählbaren Rasterpunkte, die es ermöglicht, ein Teil frei auf einen dieser Punkte zu platzieren. Dies erfolgt dann über eine Fangfunktion.

Zur Kompensation von Dimensionsänderungen der Objekte gegenüber dem ursprünglichen CAD-Modell, die durch den generativen Schichtbauvorgang hervorgerufen werden können, unterzieht die Modellabänderungseinheit 102 das ursprüngliche CAD-Modell der Anzahl der Objekte einer Skalierung (zentrischen Streckung). Insbesondere wird hierbei für alle Objekte ein gemeinsamer Transformationsreferenzpunkt (Fixpunkt der zentrischen Streckung) gewählt. Der Grund ist, dass durch die zentrische Streckung sich auch die Abstände der Objekte voneinander verändern und diese Abstandsänderungen für unterschiedlichen Lagen des Transformationsreferenzpunkts unterschiedlich sind. Abstandsänderungen können zum Einen den nachteiligen Effekt haben, dass nach der Skalierung Objekte miteinander überlappen, also nicht mehr getrennt voneinander sind. Zum Anderen können sich die Objekte infolge der Abstandsänderungen von ihren Rasterpunkten entfernen. Gerade bei einer Plattform, die nach der generativen Herstellung beispielsweise ebenfalls in einer Nachbearbeitungsvorrichtung verwendet wird, führt dies zu aufwändigen Nachjustiervorgängen in der Nachbearbeitungsvorrichtung.

Die Wahl eines geeigneten gemeinsamen Transformationsreferenzpunkts ist in der Regel von der Geometrie (insbesondere der Symmetrie) der Objekte bzw. von deren Anordnung abhängig. Im Beispiel der Figur 2 wäre der Rasterpunkt 115 auf dem das zentrale Objekt 3 angeordnet ist, ein geeigneter Transformationsreferenzpunkt für eine Skalierung. Zum Einen ändern sich die Abstände der Objekte 301, 302, 303 und 304 zum zentralen Objekt 3 in gleicher Weise. Wenn allerdings gerade an der Stelle der Verzahnung der Objekte 3 und 301 eine Überlappung vermieden werden soll, dann könnte auch der Punkt 320 als Transformationsreferenzpunkt gewählt werden.

Der Transformationsreferenzpunkt kann auf Basis einer Nutzerinteraktion mindestens teilweise benutzerdefiniert festgelegt werden. Ebenso kann der Referenzort automatisch oder teilautomatisch auf Basis mindestens eines Bestimmungsalgorithmus bestimmt werden. Dabei ist dann bevorzugt, dass der Bestimmungsalgorithmus den Referenzort auf Basis einer Kriteriendatenbank festlegt, in der mindestens eines der folgenden Kriterien hinterlegt ist:
- ein Mittelortkriterium, das aus dem computerbasierten Modell mindestens eines dreidimensionalen Objekts einen Mittelort bestimmt, der bevorzugt ausgewählt ist aus einem Mittelpunkt, einem Schwerpunkt, einem mittleren Linienpunkt einer das Objekt repräsentierenden Linie, jeweils in Bezug auf das Objekt und/oder auf eine spezifische (ausgewählte) Schicht desselben, welche Schicht dem Schichtbauverfahren zugrunde liegt;
- ein Umrisskriterium, das aus dem computerbasierten Modell mindestens eines dreidimensionalen Objekts einen Umriss bestimmt, in Bezug auf das Objekt und/oder auf eine spezifische (ausgewählte) Schicht desselben, welche Schicht dem Schichtbauverfahren zugrunde liegt.
- ein Funktionskriterium, das einem Ort und/oder Funktionsbereich des Objekts eine spezielle Funktion zuweist. Eine solche Funktion kann sich beispielsweise aus der Form des Orts bzw. Funktionsbereichs ergeben, aber auch aus seiner Position in Bezug auf das herzustellende dreidimensionale Objekt oder in Bezug auf andere herzustellende Objekte. Beispielsweise kann eine Aussparung in einem Funktionsbereich des Bauteils eine Fixierungs-Funktion innehaben, aus der zum Beispiel abgeleitet werden kann, dass die Aussparung bei der generativen Herstellung sehr genau positioniert werden muss und auch bei einer Skalierung des Objekts im Wesentlichen ortsfest bleiben sollte. Auch aus anderen Orten bzw. Funktionsbereichen können solche Anforderungen an Ortsfestigkeit abgeleitet werden.

Für eine automatische Ermittlung eines Transformationsreferenzpunktes kann es von Vorteil sein, bei der Bestimmung eines Mittelorts bzw. geometrischen Mittelpunkts eines Objekts nicht dessen wahre Gestalt zu Grunde zu legen, sondern die Gestalt und Lage eines das Objekt umgebenden Hüllkörpers, insbesondere eines dem Objekt zugeordneten, ihn minimal umgebenden Quaders (mit anderen Worten die Gestalt und Lage seiner bounding box). Unter Umständen kann es auch von Vorteil sein den eine Mehrzahl von Objekten umgebenden Hüllkörper der Bestimmung eines Mittelorts bzw. geometrischen Mittelpunkts zugrunde zu legen.

Wie man anhand des Beispiels der Fig. 2 erkennt, kann es auch von Vorteil sein, aus der Anzahl von Objekten ein Masterteil auszuwählen (in der Figur 2 das Objekt 3) und einen Transformationsreferenzpunkt und/oder den Referenzort so zu wählen, dass lediglich die Eigenschaften des Masterteils berücksichtigt werden (also dessen Symmetrie, etc.).

Schließlich erzeugt die Steuerbefehlserzeugungseinheit 103 Steuerbefehle für einen Steuerbefehlssatz zur Herstellung der Anzahl von Objekten mittels der generativen Schichtbauvorrichtung unter Zugrundelegung des von der Modellabänderungseinheit 102 abgeänderten computerbasierten Modells. Die Steuerbefehle können entweder von der Vorrichtung zur Bereitstellung von Steuerbefehlen selbst in einen Steuerbefehlssatz integriert werden oder dieser letzte Schritt erfolgt in einer separaten Vorrichtung, z.B. der Steuereinrichtung 29.

Bei der Anzahl von Objekten kann es sich um eine zusammengehörige Gruppe von herzustellenden Objekten oder aber auch um die Gesamtzahl der mit der generativen Schichtbauvorrichtung in einem Bauvorgang herzustellenden Objekte.

### Zweites Ausführungsbeispiel

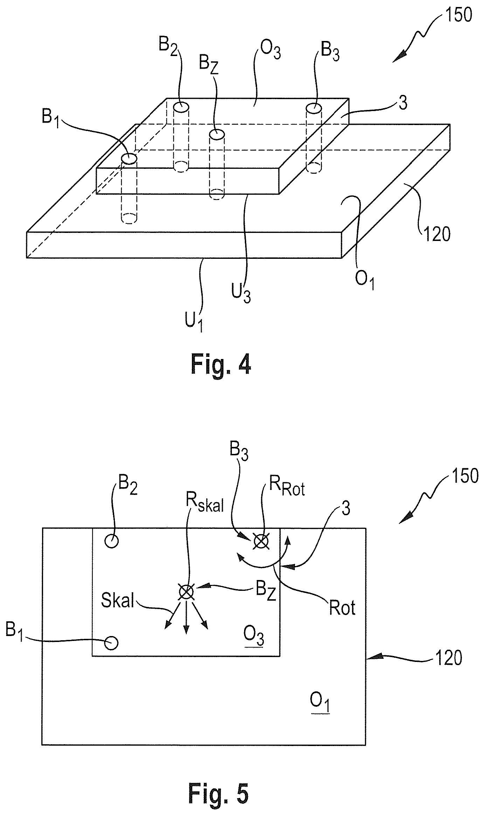

Ein zweites Ausführungsbeispiel der Erfindung wird nachfolgend unter Bezugnahme auf Fig. 4 und 5 beschrieben. Die Figuren 4 und 5 zeigen ein Modell (beispielsweise vorgehalten in Form einer CAD-Datei) eines Bauteils 3, also eines herzustellenden dreidimensionalen Objekts 3, das auf einem auf einer Unterlage angeordneten halbfertigen Teil, einer sogenannten Preform 120 mittels eines generativen Schichtbauverfahrens, beispielsweise direktem Metalllasersintern, hergestellt werden soll. Die Preform 120 ist ein in einem dem generativen Schichtbauverfahren vorgeschalteten Herstellungsprozess hergestelltes Bauteil, zum Beispiel ein CNC-Fräsbauteil o.ä. Solche Preforms werden beispielsweise in der Werkzeugherstellung verwendet und dienen als halbfertige Teile jeweils als Basis für ein Hybrid-Bauteil, dessen innere und äußere Umrisse und Funktionen durch die Nachbearbeitung im generativen Schichtbauverfahren wesentlich geprägt werden.

Auf diese Preform 120 soll das Bauteil 3 aufgebaut werden, so dass der gesamte Herstellungsprozess ein Hybrid-Herstellungsverfahren umfasst, aus dem dann ein Hybrid-Bauteil 150 bestehend aus der Preform 120 und dem Bauteil 3 entsteht, die durch das generative Schichtbauverfahren fest miteinander verbunden sind. Die Preform 120 ist hier beispielhaft als ein rechteckiges gleichmäßig hohes Teil ausgebildet und weist eine Oberseite O₁ und eine Unterseite U₁ auf. Auch das Bauteil 3 selbst ist hier rechteckig und gleichmäßig hoch ausgebildet und weist eine Oberseite O₃ und eine Unterseite U₃ auf. In der Preform 120 sind bereits vier Aussparungen in Form von Bohrungen vorgehalten. Sie korrespondieren in Form und Anordnung mit analogen Aussparungen in dem Bauteil 3, welche die Bohrungen in der Preform nach oben hin fortsetzen, so dass sich insgesamt Aussparungen B₁, B₂, B₃, B_{z} ergeben. Die Aussparungen B₁, B₂, B₃, B_{z} erstrecken sich somit von der Oberseite O₃ bis zur Unterseite U₃ des Bauteils 3 und weiter direkt fortgeführt von der Oberseite O₁ bis zur Unterseite U₁ der Preform 120. Die drei Aussparungen B₁, B₂, B₃ sind jeweils in einem Bereich von Ecken des Bauteils 3 positioniert; die Aussparung B_{z} hingegen ist eine zentrale Aussparung in der Mitte des Bauteils 3.

Im Rahmen der Erfindung wird zunächst das CAD-Modell des Bauteils 3 so abgeändert, dass ein Ort auf einem Baufeld der generativen Schichtbau-Vorrichtung (nicht gezeigt), an dem das Bauteil 3 generativ hergestellt bzw. die Preform 120 platziert werden soll, ein Referenzort für die geometrische Beschreibung des Bauteils 3 ist. Bevorzugt wird als Referenzort ein Ort auf der Preform 120 gewählt, wodurch die geometrische Beschreibung des Bauteils 3 mit Positionen auf der Oberfläche der Preform 120 verknüpft wird. Bevorzugt wird weiterhin die Preform 120 auf einem vordefinierten Ort auf der Bauunterlage angebracht, wodurch ein vordefinierter Ort auf der Preform 120 mit dem vordefinierten Ort auf der Bauunterlage verknüpft wird, so dass es ein gemeinsames Koordinatensystem zur Beschreibung von Orten auf der Preform 120 und Orten auf der Bauunterlage gibt.

Als Nächstes werden für eine Skalierung (zentrische Streckung) der Daten des Bauteils 3 und eine Drehung von Bauteil 3 und Preform 120 auf dem Baufeld Transformationsreferenzpunkte festgelegt. Anhand von Fig. 5 ist erkennbar, dass im vorliegenden Beispiel zwei unterschiedliche Transformationsreferenzpunkte Rᵣₒₜ und Rₛₖₐₗ vorhanden sind, wobei der erste Transformationsreferenzpunkt Rₛₖₐₗ dazu dient, das Bauteil 3 beispielsweise im Rahmen eines Schwundausgleichs größer zu skalieren. Alle Skalierungspfeile Skal weisen also in radialer Richtung weg vom ersten Transformationsreferenzpunkt Rₛₖₐₗ, der genau in der Mitte der zentralen Aussparung B_{z} positioniert (d.h. bestimmt) ist. Hierdurch kann gewährleistet werden, dass der Schwundausgleich gleichmäßig entlang jeder Linie bzw. Strecke von der zentralen Aussparung B_{z} in Richtung der Außenbegrenzungen des Bauteils 3 vorgenommen wird. Hierdurch ergibt sich im Endeffekt ein in Bezug auf die Preform 120 maßstabsgetreuer Schwundausgleich. Dadurch kann im Endeffekt sichergestellt werden, dass nach der Durchführung des generativen Schichtbauverfahrens der ununterbrochene geradlinige (d.h. allgemein: vorgesehene) Verlauf aller Aussparungen B₁, B₂, B₃, B_{z} von der Unterseite U₁ bis zur Oberseite O₃ gewährleistet ist. Würde eine Skalierung dagegen von einem anderen Transformationsreferenzpunkt durchgeführt werden als hier gezeigt, so wären Verschiebungen der Aussparungen im Bauteil 3 zu denen in der Preform 120 vorprogrammiert. Die Wahl des für die Skalierung vorgesehenen Transformationsreferenzpunkts Rₛₖₐₗ ist im Wesentlichen bauteilabhängig, d.h. abhängig von seiner jeweiligen Geometrie und/oder Zuordnung zu anderen damit korrespondierenden Teilen wie hier der Preform 120.

Dagegen dient der zweite Transformationsreferenzpunkt Rᵣₒₜ , der im Mittelpunkt der dritten Aussparung B₃ angeordnet ist, als Mittelpunkt einer Rotation von Bauteil 3 und Preform 120 auf dem Baufeld entlang einer Rotationsrichtung Rot, mit dem Zweck, die beiden beim generativen Schichtbau entsprechend zu orientieren.

Bevorzugt wird das Bauteil zuerst orientiert, d. h. entlang einer durch den Transformationsreferenzpunkt Rᵣₒₜ definierten, hier senkrecht in die Figur hinein erstreckten Rotationsachse entlang der Rotationsrichtung Rot rotiert und dann wie oben beschrieben skaliert.

Es wäre auch möglich, für die Skalierung und Drehung einen gemeinsamen Transformationsreferenzpunkt zu wählen, der dann ein Fixpunkt für die letztendlich durchgeführte Drehstreckung wäre. Wichtig ist, dass der Transformationsreferenzpunkt für die Streckung ein Punkt ist, der in gleicher Weise für eine Streckung der Preform 120 gewählt werden würde infolge der gleichen Symmetrieeigenschaften von Preform 120 und Bauteil 3 (hier insbesondere der Lage der miteinander wechselwirkenden (korrespondierenden) Abschnitte von Bauteil 3 und Preform 120, also im vorliegenden Beispiel der Lage der Aussparungen (Bohrungen) B₁, B₂, B₃ an den Ecken). Insbesondere kann der Referenzort auf dem Baufeld auch identisch mit einem Transformationsreferenzpunkt sein, wodurch sich die Festlegung des abgeänderten CAD-Modells des Bauteils 3 (also des CAD-Modells nach dessen Skalierung und/oder Drehung) vereinfacht.

Anhand der Figuren 4 und 5 wurde ein Ausführungsbeispiel mit einer Preform 120 beschrieben. Nicht zwangsläufig muss ein solches Hybridverfahren durchgeführt werden; es kommt auch vor, dass Bauteile gebaut werden, die von sogenannten Supports unterstützt werden, d.h. einer Aufbaustruktur, die im generativen Schichtbauverfahren unterhalb des eigentlich Bauteils (also zwischen dem Bauteil und einer Unterlage des Baufelds (etwa einer Bauplattform) liegt und die als Stützstruktur des Bauteils während des Bauvorgangs dient. In diesem Fall kann man die Supports als zu der beim ersten Ausführungsbeispiel beschriebenen Anzahl von Objekten zugehörig ansehen und das Vorgehen ist so, wie es beim ersten Ausführungsbeispiel beschrieben wurde, mit der Ausnahme dass ein Objekt und der zugehörige Support ggf. dem gleichen Rasterpunkt 115 im Baufeld zuzuordnen sind.

Ferner können alle im Zusammenhang mit dem ersten Ausführungsbeispiel beschriebenen Abwandlungsmöglichkeiten in gleicher Weise auch bei dem zweiten Ausführungsbeispiel angewendet werden. Insbesondere kann auch eine Mehrzahl von Objekten auf einer Preform 120 hergestellt werden.

Es wird noch einmal betont, dass die hier beschriebenen Ausführungsbeispiele sowohl je für sich stehen als auch beliebig miteinander kombiniert werden können. Der Begriff "ein(e)" schließt in der Regel als Option auch "mehrere" mit ein, außer er ist dezidiert erkennbar als "einzeln(e)" bzw. "genau ein(e)" spezifiziert. Eine Einheit kann auch mehrere Untereinheiten umfassen, die auch räumlich voneinander getrennt vorgehalten werden können. Als "Anzahl" wird "ein oder mehrere" verstanden; als "Mehrzahl" "mehr als ein".

Abschließend sei noch erwähnt, dass die einzelnen Komponenten 101 bis 103 der Vorrichtung zur Bereitstellung von Steuerbefehlen entweder mittels Hardware realisiert sein können oder als reine Softwaremodule oder als Mischungen aus Hardware und Software vorliegen können. Insbesondere Schnittstellen müssen nicht zwangsläufig als Hardware-Komponenten ausgebildet sein, sondern können auch als Software-Module realisiert sein, beispielsweise wenn die darüber eingespeisten bzw. ausgegebenen Daten von einer bereits auf dem gleichen Gerät realisierten anderen Komponente übernommen werden können oder an eine andere Komponente nur softwaremäßig übergeben werden müssen. Ebenso können die Schnittstellen aus Hardware- und Software-Komponenten bestehen, wie zum Beispiel einer Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle zusammengefasst sein.

## Patentansprüche

1. Vorrichtung zur Bereitstellung von Steuerbefehlen zur Herstellung einer Mehrzahl von dreidimensionalen Objekten (2) mittels einer generativen Schichtbauvorrichtung, wobei in der generativen Schichtbauvorrichtung die Mehrzahl von Objekten Schicht für Schicht hergestellt wird, indem jeweils eine Schicht eines formlosen Aufbaumaterials auf einer Bauunterlage oder einer bereits vorhandenen Aufbaumaterialschicht aufgetragen wird und an den dem Querschnitt eines Objekts entsprechenden Stellen durch Zufuhr von Energiestrahlung oder eines Bindemittels zu diesen Stellen in einem Baufeld der generativen Schichtbauvorrichtung verfestigt wird, wobei die Vorrichtung mindestens aufweist:
eine Modelldaten-Zugriffseinheit (101), welche ausgelegt ist auf Modelldaten eines computerbasierten Modells der Mehrzahl an Objekten, das die Objekte geometrisch beschreibt, zuzugreifen, wobei in dem computerbasierten Modell für jedes der Objekte ein Koordinatenursprung definiert ist,
eine Modellabänderungseinheit (102), welche ausgelegt ist, die Modelldaten des computerbasierten Modells dergestalt abzuändern, dass für die geometrische Beschreibung der Mehrzahl von Objekten ein Ort als gemeinsamer Koordinatenursprung, festgelegt wird, wobei der gemeinsame Koordinatenursprung einem bestimmten Ort, der in Baufeldkoordinaten auf dem Baufeld spezifiziert ist, zugewiesen wird und wobei der jeweilige Koordinatenursprung von jedem der Objekte in Bauteilkoordinaten den Baufeldkoordinaten eines Rasterpunktes im Baufeld zugewiesen wird, und/oder
wobei es sich bei dem festgelegten Ort um einen Ort auf der Bauunterlage oder einen Ort mit fest vorgegebener Position relativ zur Bauunterlage handelt,
eine Steuerbefehlserzeugungseinheit (103) welche ausgelegt ist zum Erzeugen von Steuerbefehlen der generativen Schichtbauvorrichtung für einen Steuerbefehlssatz zur Herstellung der Mehrzahl von Objekten mittels der generativen Schichtbauvorrichtung unter Zugrundelegung des abgeänderten computerbasierten Modells, so dass der Steuerbefehlssatz für jede zu verfestigende Schicht bei der Herstellung der Mehrzahl von Objekten Daten enthält, die die genauen Parameter beim Verfestigen des Aufbaumaterials festlegen.

2. Verfahren zur Ausführung mittels einer Vorrichtung nach Anspruch 1, wobei das Verfahren mindestens die folgenden Schritte aufweist:
einen Schritt des Bereitstellens eines computerbasierten Modells der Mehrzahl an Objekten, das die Objekte geometrisch beschreibt, wobei in dem computerbasierten Modell für jedes der Objekte ein Koordinatenursprung definiert ist,
einen Schritt des Abänderns des computerbasierten Modells dergestalt, dass für die geometrische Beschreibung der Mehrzahl von Objekten ein Ort als gemeinsamer Koordinatenursprung, festgelegt wird, wobei der
gemeinsame Koordinatenursprung einem bestimmten Ort, der in Baufeldkoordinaten auf dem Baufeld spezifiziert ist, zugewiesen wird und wobei der jeweilige Koordinatenursprung von jedem der Objekte in Bauteilkoordinaten den Baufeldkoordinaten eines Rasterpunktes im Baufeld zugewiesen wird, und/oder
wobei es sich bei dem festgelegten Ort um einen Ort auf der Bauunterlage oder einen Ort mit fest vorgegebener Position relativ zur Bauunterlage handelt,
einen Schritt des Erzeugens von Steuerbefehlen für einen Steuerbefehlssatz der generativen Schichtbauvorrichtung zur Steuerung der Herstellung der Mehrzahl von Objekten mittels der generativen Schichtbauvorrichtung unter Zugrundelegung des abgeänderten computerbasierten Modells, so dass der Steuerbefehlssatz für jede zu verfestigende Schicht bei der Herstellung der Mehrzahl von Objekten Daten enthält, die die genauen Parameter beim Verfestigen des Aufbaumaterials festlegen.

3. Verfahren nach Anspruch 2, wobei bei dem Schritt des Abänderns des computerbasierten Modells zusätzlich das computerbasierte Modell durch eine Drehung und/oder zentrische Streckung bezogen auf einen gemeinsamen Transformationsreferenzpunkt für die Mehrzahl der Objekte, in ein abgeändertes computerbasiertes Modell überführt wird.

4. Verfahren nach Anspruch 3, wobei auf der Bauunterlage ein halbfertiges Teil (120) angeordnet ist, das durch die Herstellung der Mehrzahl von Objekten auf diesem halbfertigen Teil vervollständigt wird und der Drehung und/oder zentrischen Streckung ein gemeinsamer Transformationsreferenzpunkt für die Mehrzahl der Objekte und das halbfertige Teil zugrunde gelegt wird.

5. Verfahren nach Anspruch 3 oder 4, wobei es sich bei dem Transformationsreferenzpunkt um einen geometrischen Mittelpunkt in dem computerbasierten Modell handelt, insbesondere einen Symmetriepunkt oder einen Schwerpunkt.

6. Verfahren nach einem der Ansprüche 3 bis 5, wobei der Transformationsreferenzpunkt so gewählt wird, dass er mit dem festgelegten Ort zusammenfällt.

7. Verfahren nach einem der Ansprüche 3 bis 6, wobei abgeprüft wird, ob es in dem abgeänderten computerbasierten Modell Überschneidungen von Objekten oder Überschneidungen von deren Hüllkörpern gibt und falls dies der Fall ist, in dem Modell die betreffenden Objekte solange verschoben werden, bis keine Überschneidung mehr vorliegt.

8. Verfahren nach einem der Ansprüche 2 bis 7, wobei auf der Bauunterlage ein halbfertiges Teil (120) angeordnet ist, das durch die Herstellung der Mehrzahl von Objekten auf diesem halbfertigen Teil (120) vervollständigt wird, wobei als Referenzort der gleiche Ort gewählt wird, der in einem vorangegangenen Herstellungsvorgang für das halbfertige Teil als Referenzort gewählt wurde.

9. Verfahren nach einem der vorangegangenen Ansprüche, wobei das Verfahren vollautomatisch, das heißt ohne eine notwendige Eingabe eines Nutzers, abläuft.

10. Vorrichtung nach Anspruch 1, bei der die Modellabänderungseinheit (102) so ausgelegt ist, dass sie zusätzlich das computerbasierte Modell durch eine Drehung und/oder zentrische Streckung bezogen auf einen gemeinsamen Transformationsreferenzpunkt für die Mehrzahl der Objekte in ein abgeändertes computerbasiertes Modell überführt.

11. Verfahren zur Herstellung einer Mehrzahl von dreidimensionalen Objekten mittels einer generativen Schichtbauvorrichtung, die durch einen Steuerbefehlssatz gesteuert wird, der durch ein Verfahren nach einem der Ansprüche 2 bis 8 bereitgestellte Steuerbefehle enthält,
wobei in der generativen Schichtbauvorrichtung die Mehrzahl an Objekten (3) Schicht für Schicht hergestellt wird durch Verfestigung eines formlosen Aufbaumaterials (15) an den dem Querschnitt eines Objekts in einer Schicht entsprechenden Stellen durch Zufuhr von Energiestrahlung oder eines Bindemittels zu diesen Stellen und das Verfahren mindestens die folgenden Schritte aufweist:
einen Auftragsschritt des Bereitstellens einer Schicht eines formlosen Aufbaumaterials (15) auf einer Bauunterlage (11, 12) oder einer bereits vorhandenen Schicht des Aufbaumaterials,
einen Verfestigungsschritt des Verfestigens der aufgetragenen Schicht, bei dem die Energiestrahlung oder das Bindemittel auf zu verfestigende Stellen der Schicht in einem Baufeld der generativen Schichtbauvorrichtung dergestalt einwirkt, dass das Aufbaumaterial nach der Einwirkung als Festkörper vorliegt,
wobei der Auftragsschritt und der Verfestigungsschritt nacheinander so oft wiederholt werden, bis alle Querschnitte des mindestens einen herzustellenden dreidimensionalen Objekts verfestigt sind.

12. Verfahren nach Anspruch 11,
wobei die Bauunterlage nach Abschluss des Herstellungsvorgangs mitsamt der hergestellten Mehrzahl der Objekte der generativen Schichtbauvorrichtung entnommen wird und in eine Weiterverarbeitungsvorrichtung zur weiteren Bearbeitung mindestens eines, bevorzugt aller, der hergestellten Mehrzahl der Objekte eingesetzt wird, in welcher die Bauunterlage als Bearbeitungsunterlage zur Abstützung weiterzubearbeitender Objekte während der weiteren Bearbeitung dient und
wobei der Weiterverarbeitungsvorrichtung der Referenzort und/oder das abgeänderte Modell der weiterzubearbeitenden Objekte, in welchem für die geometrische Beschreibung der weiterzubearbeitenden Objekte ein Ort als gemeinsamer Referenzort, insbesondere als gemeinsamer Koordinatenursprung, festgelegt ist, übermittelt wird.

13. Generative Schichtbauvorrichtung zur Herstellung einer Mehrzahl von dreidimensionalen Objekten aus einem formlosen Aufbaumaterial Schicht für Schicht durch Verfestigung des Aufbaumaterials an den dem Querschnitt eines Objekts in einer Schicht entsprechenden Stellen durch Zufuhr von Energiestrahlung oder eines Bindemittels zu diesen Stellen in einem Baufeld der generativen Schichtbauvorrichtung, wobei die Vorrichtung aufweist:
eine Bauunterlage (11, 12) zum Tragen des zu bildenden Objektes (3);
eine Auftragsvorrichtung (14, 16) zum Aufbringen einer Schicht des Aufbaumaterials auf die Oberfläche der Bauunterlage (11, 12) oder eine bereits vorhandene Schicht,
eine Verfestigungsvorrichtung (20), die Energiestrahlung emittiert oder ein Bindemittel ausstößt und in der Lage ist, allen in einer Schicht zu verfestigenden Stellen die Energiestrahlung oder das Bindemittel so zuzuführen, dass das Aufbaumaterial an diesen Stellen nach der Einwirkung der Energiestrahlung oder des Bindemittels als Festkörper vorliegt, und
eine Steuereinrichtung (29), welche die Auftragsvorrichtung (14, 16) und die Verfestigungsvorrichtung (20) so steuert, dass ein Auftragsschritt und ein Verfestigungsschritt nacheinander so oft wiederholt werden, bis alle Querschnitte des mindestens einen herzustellenden dreidimensionalen Objekts verfestigt sind,
wobei die Steuereinrichtung (29) so ausgelegt ist, dass sie ein Verfahren nach einem der Ansprüche 2 bis 9 und/oder ein Verfahren nach Anspruch 11 oder 12 ausführt.

14. Computerprogramm, das in eine programmierbare Steuereinrichtung und/oder Datenverarbeitungsvorrichtung ladbar ist, mit Programmcodemitteln, um alle Schritte eines Verfahrens gemäß einem der Ansprüche 2 bis 9 und/oder eines Verfahrens nach Anspruch 11 oder 12 auszuführen, wenn das Computerprogramm auf der Steuereinrichtung und/oder der Datenverarbeitungsvorrichtung ausgeführt wird.

## Claims

1. A device for providing control commands for the production of a plurality of three-dimensional objects (2) by means of an additive layer-wise building device, wherein the plurality of objects is produced layer by layer in the additive layer-wise building device by applying each time a layer of a shapeless building material on a building base or an already existing building material layer and solidifying said layer at positions that correspond to the cross-section of an object by supplying energy radiation or a binder at said positions in a build area of the additive layer-wise building device, wherein the device comprises at least:
a model data access unit (101) that is configured to access model data of a computer-based model of the plurality of objects, which model geometrically describes the objects, wherein for each of the objects a coordinate origin is defined in the computer-based model,
a model modification unit (102) that is configured to modify the model data of the computer-based model in such a way that for the geometric description of the plurality of objects a location is defined as a common coordinate origin, wherein the common coordinate origin is assigned to a specific location specified in build area coordinates in the build area, and wherein the respective coordinate origin of each of the objects in component coordinates is assigned to the build area coordinates of a grid point in the build area, and/or
wherein the specified location is a location on the building base or a location having a fixedly predetermined position relative to the building base,
a control command generating unit (103) that is configured to generate control commands of the additive layer-wise building device for a set of control commands for the production of the plurality of objects by means of the additive layer-wise building device based on the modified computer-based model, such that the set of control commands includes data for each layer to be solidified in the manufacture of the plurality of objects, which data defines the exact parameters for solidifying the building material.

2. A method to be carried out by a device according to claim 1, the method comprising at least the following steps:
a step of providing a computer-based model of the plurality of objects, which model geometrically describes the objects, wherein a coordinate origin is defined in the computer-based model for each of the objects,
a step of modifying the computer-based model such that for the geometric description of the plurality of objects a location is defined as a common coordinate origin, wherein the common coordinate origin is assigned to a specific location specified in build area coordinates on the build area, and wherein the respective coordinate origin of each of the objects in component coordinates is assigned to the build area coordinates of a grid point in the build area, and/or
wherein the specified location is a location on the building base or a location having a fixedly predetermined position relative to the building base,
a step of generating control commands for a set of control commands of the additive layer-wise building device for controlling the production of the plurality of objects by means of the additive layer-wise building device on the basis of the modified computer-based model, such that the set of control commands for each layer to be solidified during the manufacture of the plurality of objects contains data that defines the exact parameters for solidifying the building material.

3. Method according to claim 2, wherein in the step of modifying the computer-based model the computer-based model is additionally converted into a modified computer-based model by a rotation and/or central dilation with respect to a common transformation reference point for the plurality of objects.

4. Method according to claim 3, wherein a semi-finished part (120) is arranged on the building base, which semi-finished part is completed by producing the plurality of objects on said semi-finished part and wherein a common transformation reference point for the plurality of objects and the semi-finished part is taken as the basis for the rotation and/or central dilation.

5. Method according to claim 3 or 4, wherein the transformation reference point is a geometric center in the computer-based model, in particular a symmetry point or a center of gravity.

6. Method according to one of claims 3 to 5, wherein the transformation reference point is selected such that it coincides with the specified location.

7. Method according to one of claims 3 to 6, wherein it is checked whether there are overlaps of objects or overlaps of their bounding volumes in the modified computer-based model and if this is the case, the respective objects are relocated in the model until there is no longer an overlap.

8. Method according to one of claims 2 to 7, wherein a semi-finished part (120) is arranged on the building base which semi-finished part is completed by producing the plurality of objects on said semi-finished part (120), wherein the same location is selected as a reference location that was selected as a reference location in a previous building process for the semi-finished part.

9. Method according to one of the preceding claims, wherein the method runs fully automatically, that is without a necessary input from a user.

10. Device according to claim 1, wherein the model modification unit (102) is configured to additionally transfer the computer-based model into a modified computer-based model by a rotation and/or central dilation with respect to a common transformation reference point for the plurality of objects.

11. A method for producing a plurality of three-dimensional objects by means of an additive layer-wise building device that is controlled by a set of control commands which comprises control commands provided by a method according to one of claims 2 to 8,
wherein in the additive layer-wise building device, the plurality of objects (3) is produced layer by layer by solidifying a shapeless building material (15) at positions corresponding to the cross-section of an object in a layer by supplying energy radiation or a binder at these positions, the method comprising at least the following steps:
an application step of providing a layer of a shapeless building material (15) on a building base (11, 12) or on an already existing layer of the building material,
a solidification step of solidifying the applied layer, in which step the energy radiation or the binder acts upon positions to be solidified in the layer in a build area of the additive layer-wise building device in such a way that the building material is present as a solid body after said action of the radiation or binder,
wherein the application step and the solidification step are repeated successively until all cross-sections of the at least one three-dimensional object to be produced are solidified.

12. Method according to claim 11,
wherein the building base is removed together with the produced plurality of objects from the layer-wise building device after completion of the production process and is introduced into a further processing device for further processing of at least one, preferably all, of the produced plurality of objects, in which further processing device the building base serves as a processing base for supporting the objects to be further treated during further processing and
wherein the reference location and/or the modified model of the objects to be further processed, in which model a location is defined as a common reference location, in particular as a common coordinate origin, for the geometric description of the objects to be further processed, is conveyed to the further processing device.

13. An additive layer-wise building device for producing, layer by layer, a plurality of three-dimensional objects from a shapeless building material by solidifying the building material at positions corresponding to the cross-section of an object in a layer by supplying energy radiation or a binder at these locations in a build area of the additive layer-wise building device, wherein the device comprises:
a building base (11, 12) for supporting the object (3) to be formed;
an application device (14, 16) for applying a layer of the building material to the surface of the building base (11, 12) or an already existing layer,
a solidification device (20) which emits energy radiation or ejects a binder and is capable of supplying the energy radiation or the binder to all positions to be solidified in a layer in such a way that the building material is present as a solid body at these positions after the action of the energy radiation or the binder, and
a control device (29) which controls the application device (14, 16) and the solidification device (20) in such a way that an application step and a solidification step are repeated successively until all the cross-sections of the at least one three-dimensional object to be produced are solidified,
wherein the control device (29) is configured such that it executes a method according to one of claims 2 to 9 and/or a method according to claim 11 or 12.

14. A computer program, which computer program can be loaded into a programmable control device and/or a data processing device, which computer program comprises program code means for executing all steps of a method according to one of claims 2 to 9 and/or of a method according to claim 11 or 12 when the computer program is executed on the control device and/or on the data processing device.

## Revendications

1. Dispositif de mise à disposition des instructions de commande pour la fabrication d'une pluralité d'objets tridimensionnels (2) au moyen d'un dispositif de construction générative de couches, où, dans le dispositif de construction générative de couches, la pluralité d'objets est fabriquée couche par couche en ce que, respectivement, une couche d'un matériau de construction sans forme est appliquée sur un support de construction ou sur une couche de matériau de construction déjà présente et est solidifiée aux positions correspondant à la section transversale d'un objet par l'apport d'un rayonnement d'énergie ou d'un liant à ces positions dans une zone de construction du dispositif de construction générative de couches, où le dispositif présente au moins :
une unité d'accès à des données de modèle (101), qui est conçue pour accéder à des données de modèle d'un modèle de type informatique de la pluralité d'objets, qui décrit géométriquement les objets, où, dans le modèle de type informatique, une origine de coordonnées est définie pour chacun des objets,
une unité de modification de modèle (102), qui est conçue pour modifier les données de modèle du modèle de type informatique de telle sorte que, pour la description géométrique de la pluralité d'objets, un emplacement est défini en tant qu'origine de coordonnées commune, où l'origine de coordonnées commune est attribuée à un emplacement déterminé, qui est spécifié en coordonnées de zone de construction sur la zone de construction, et où l'origine de coordonnées respective de chacun des objets en coordonnées de zone de construction est attribuée aux coordonnées de zone de construction d'un point de trame dans la zone de construction, et/ou
où l'emplacement défini est un emplacement sur le support de construction ou un emplacement avec une position prédéfinie fixe par rapport au support de construction,
une unité de génération d'instructions de commande (103), qui est conçue pour générer des instructions de commande du dispositif de construction générative de couches pour un jeu d'instructions de commande pour la fabrication de la pluralité d'objets au moyen du dispositif de construction générative de couches en se basant sur le modèle de type informatique modifié, de sorte que le jeu d'instructions de commande pour chaque couche à solidifier lors de la fabrication de la pluralité d'objets contient des données qui définissent les paramètres précis lors de la solidification du matériau de construction.

2. Procédé destiné à être exécuté au moyen d'un dispositif selon la revendication 1, où le procédé présente au moins les étapes suivantes :
une étape de fournir un modèle de type informatique de la pluralité d'objets, qui décrit géométriquement les objets, où, dans le modèle de type informatique, une origine de coordonnées est définie pour chacun des objets,
une étape de modifier le modèle de type informatique de telle sorte que, pour la description géométrique de la pluralité d'objets, un emplacement est défini en tant qu'origine de coordonnées commune, où l'origine de coordonnées commune est attribuée à un emplacement déterminé, qui est spécifié en coordonnées de zone de construction sur la zone de construction, et où l'origine de coordonnées respective de chacun des objets en coordonnées de zone de construction est attribuée aux coordonnées de zone de construction d'un point de trame dans la zone de construction, et/ou
où l'emplacement défini est un emplacement sur le support de construction ou un emplacement avec une position prédéfinie fixe par rapport au support de construction,
une étape de générer des instructions de commande pour un jeu d'instructions de commande du dispositif de construction générative de couches pour commander la fabrication de la pluralité d'objets au moyen du dispositif de construction générative de couches en se basant sur le modèle de type informatique modifié, de sorte que le jeu d'instructions de commande pour chaque couche à solidifier lors de la fabrication de la pluralité d'objets contient des données qui définissent les paramètres précis lors de la solidification du matériau de construction.

3. Procédé selon la revendication 2, où, lors de l'étape de modifier le modèle de type informatique, le modèle de type informatique est en outre transformé en un modèle de type informatique modifié par une rotation et/ou un étirage central par rapport à un point de référence de transformation commun pour la pluralité d'objets.

4. Procédé selon la revendication 3, où, sur le support de construction, une pièce semi-finie (120) est disposée, qui est complétée par la fabrication de la pluralité d'objets sur cette pièce semi-finie, et un point de référence de transformation commun pour la pluralité d'objets et la pièce semi-finie est utilisée comme base pour la rotation et/ou l'étirage central.

5. Procédé selon la revendication 3 ou 4, où le point de référence de transformation est un point central géométrique dans le modèle de type informatique, en particulier un point de symétrie ou un centre de gravité.

6. Procédé selon l'une des revendications 3 à 5, où le point de référence de transformation est choisi de manière à coïncider avec l'emplacement défini.

7. Procédé selon l'une des revendications 3 à 6, où il est vérifié s'il y a des intersections d'objets ou des intersections de leurs corps enveloppants dans le modèle de type informatique modifié et, si c'est le cas, les objets concernés sont déplacés dans le modèle jusqu'à ce qu'il n'y ait plus d'intersection.

8. Procédé selon l'une des revendications 2 à 7, où, sur le support de construction, une pièce semi-finie (120) est disposée, qui est complétée par la fabrication de la pluralité d'objets sur cette pièce semi-finie (120), où le même emplacement est choisi comme emplacement de référence que celui qui a été choisi comme emplacement de référence dans une opération de fabrication précédente pour la pièce semi-finie.

9. Procédé selon l'une des revendications précédentes, où le procédé se déroule de manière entièrement automatique, c'est-à-dire sans entrée nécessaire d'un utilisateur.

10. Dispositif selon la revendication 1, où l'unité de modification de modèle (102) est conçue de telle sorte qu'elle transforme en outre le modèle de type informatique en un modèle de type informatique modifié par une rotation et/ou un étirage central par rapport à un point de référence de transformation commun pour la pluralité d'objets.

11. Procédé de fabrication d'une pluralité d'objets tridimensionnels au moyen d'un dispositif de construction générative de couches, qui est commandé par un jeu d'instructions de commande qui contient des instructions de commande fournies par un procédé selon l'une des revendications 2 à 8,
où, dans le dispositif de construction générative de couches, la pluralité d'objets (3) est fabriquée couche par couche par solidification d'un matériau de construction sans forme (15) aux positions correspondant à la section transversale d'un objet dans une couche par l'apport d'un rayonnement d'énergie ou d'un liant à ces positions et le procédé présente au moins les étapes suivantes :
une étape d'application consistant à fournir une couche d'un matériau de construction sans forme (15) sur un support de construction (11, 12) ou une couche déjà présente du matériau de construction,
une étape de solidification consistant à solidifier la couche appliquée, où le rayonnement d'énergie ou le liant agit sur des positions à solidifier de la couche dans une zone de construction du dispositif de construction générative de couches de telle sorte que le matériau de construction se présente sous forme de corps solide après l'action,
où l'étape d'application et l'étape de solidification sont répétées successivement jusqu'à ce que toutes les sections transversales de l'au moins un objet tridimensionnel à fabriquer soient solidifiées.

12. Procédé selon la revendication 11,
où le support de construction est retiré du dispositif de construction générative de couches après la fin de l'opération de fabrication conjointement avec la pluralité fabriquée des objets et est inséré dans un dispositif de traitement ultérieur pour le traitement ultérieur d'au moins un, de préférence de la totalité de la pluralité fabriquée des objets, où le support de construction sert de support de traitement pour soutenir des objets à traiter ultérieurement pendant le traitement ultérieur, et
où l'emplacement de référence et/ou le modèle modifié des objets à traiter ultérieurement, dans lequel, pour la description géométrique des objets à traiter ultérieurement, un emplacement est défini en tant qu'emplacement de référence commun, en particulier en tant qu'origine de coordonnées commune, est transmis au dispositif de traitement ultérieur.

13. Dispositif de construction générative de couches pour la fabrication couche par couche d'une pluralité d'objets tridimensionnels à partir d'un matériau de construction sans forme par solidification du matériau de construction aux positions correspondant à la section transversale d'un objet dans une couche par l'apport d'un rayonnement d'énergie ou d'un liant à ces positions dans une zone de construction du dispositif de construction générative de couches, où le dispositif présente :
un support de construction (11, 12) pour supporter l'objet à former (3) ;
un dispositif d'application (14, 16) pour appliquer une couche du matériau de construction sur la surface du support de construction (11, 12) ou une couche déjà présente,
un dispositif de solidification (20) qui émet un rayonnement d'énergie ou éjecte un liant et qui est capable d'apporter le rayonnement d'énergie ou le liant à toutes les positions à solidifier dans une couche, de telle sorte que le matériau de construction se présente sous forme de corps solide à ces positions après l'action du rayonnement d'énergie ou du liant, et
un dispositif de commande (29) qui commande le dispositif d'application (14, 16) et le dispositif de solidification (20) de telle sorte qu'une étape d'application et une étape de solidification soient répétées successivement jusqu'à ce que toutes les sections transversales de l'au moins un objet tridimensionnel à fabriquer soient solidifiées,
où le dispositif de commande (29) est conçu de telle sorte qu'il exécute un procédé selon l'une des revendications 2 à 9 et/ou un procédé selon la revendication 11 ou 12.

14. Programme informatique qui est chargeable dans un dispositif de commande programmable et/ou un dispositif de traitement de données, comprenant des moyens de code de programme pour exécuter toutes les étapes d'un procédé selon l'une des revendications 2 à 9 et/ou d'un procédé selon la revendication 11 ou 12, lorsque le programme informatique est exécuté sur le dispositif de commande et/ou le dispositif de traitement de données.
